# EUROPEAN PATENT SPECIFICATION

(11) **EP 1 676 985 B1**
(45) Date of publication and mention of the grant of the patent: **23.07.2008**
(21) Application number: 04787624.8
(22) Date of filing: 02.09.2004
(51) Int. Cl.: F01N 3/20

(54) **EXHAUST GAS PURIFICATION DEVICE OF ENGINE**
ABGASENTGIFTUNGSVORRICHTUNG FÜR MOTOR
DISPOSITIF D'EPURATION DE GAZ D'ECHAPPEMENT DE MOTEUR

(30) Priority: 30.09.2003 JP 2003339245; 30.09.2003 JP 2003341586
(43) Date of publication of application: 05.07.2006
(73) Proprietor: Nissan Diesel Motor Co., Ltd., Ageo-shi, Saitama 362-8523 (JP)
(72) Inventor: HIRATA, Kiminobu, NISSAN DIESEL MOTOR CO., LTD., Ageo-shi, Saitama 362-8523 (JP); AKAGAWA, Hisashi, NISSAN DIESEL MOTOR CO., LTD., Ageo-shi, Saitama 362-8523 (JP); NAKAMURA, Shuichi, NISSAN DIESEL MOTOR CO., LTD., Ageo-shi, Saitama 362-8523 (JP); UENO, Hiroki, NISSAN DIESEL MOTOR CO., LTD., Ageo-shi, Saitama 362-8523 (JP); SAKAI, Ikuo, NISSAN DIESEL MOTOR CO., LTD., Ageo-shi, Saitama 362-8523 (JP)
(74) Representative: Driver, Virginia Rozanne
(86) International application number: PCT/JP2004/012744
(87) International publication number: WO 2005/033479

(56) References cited:
- WO-A-03/014541
- WO-A1-02/25074
- DE-A1- 4 436 415
- DE-C1- 19 856 366
- JP-A- 9 096 212
- JP-A- 2001 523 165
- JP-A- 2002 543 335
- JP-A- 2003 269 145
- JP-U- 4 118 133

## Description

### TECHNICAL FIELD

The present invention relates to an exhaust gas purification apparatus for an engine (referred to hereunder as "exhaust gas purification apparatus"), which reduces the nitrogen oxide (NOx) in the exhaust gas using a liquid reducing agent. In particular, it relates to technology for suppressing clogging in the injection nozzle and its associated piping.

### BACKGROUND ART

As an exhaust gas purification system for purifying NOx contained in engine exhaust gas, the exhaust gas purification apparatus disclosed in Japanese Unexamined Patent Publication No. 2000-27627 (Patent Document 1) has been proposed.

In such an exhaust gas purification apparatus, NOx is purified into harmless constituents by arranging a reduction catalytic converter in the engine exhaust system, and a reducing agent is injection-supplied into the exhaust gas at an upstream side of the reduction catalytic converter, to thereby cause a catalytic reduction reaction between the reducing agent and NOx in the exhaust gas. The reducing agent is of liquid state at the room temperature and is stored in a storage tank, and a necessary amount depending on engine operating conditions, is injection-supplied from an injection nozzle. Here, as the reducing agent, a liquid reducing agent such as a urea aqueous solution, an ammonia aqueous solution, or diesel oil whose main constituent is hydrocarbons, is used.
Patent Document 1: Japanese Unexamined Patent Publication No. 2000-27627

### DISCLOSURE OF THE INVENTION PROBLEMS THAT THE INVENTION IS TO SOLVE

However, depending on the engine operating conditions, the amount of NOx in the exhaust gas is sometimes small, and NOx purification by a reduction catalytic converter is not necessary. Therefore, in view of avoiding unnecessary consumption of the liquid reducing agent, a construction in which the liquid reducing agent is injection-supplied into the exhaust gas at an upstream side of the reduction catalytic converter intermittently depending on the engine operating conditions is adopted. In the case where such a construction is adopted, after the injection-supply of the liquid reducing agent stops, there is concern that the liquid reducing agent solidifies inside the injection nozzle and its associated piping causing them to be clogged, and the liquid reducing agent can no longer be injection-supplied. That is, immediately after the injection-supply of the liquid reducing agent is stopped, liquid drops of the liquid reducing agent are attached to the inside of the injection nozzle and its associated piping. Then, the temperatures of the injection nozzle and its associated piping increase due to the exhaust heat, since they are directly exposed to the high temperature exhaust gas, and the water content from the liquid reducing agent evaporates and the reducing agent constituents are deposited. When the injection nozzle and its associated piping become clogged and are unable to injection-supply the liquid reducing agent, NOx purification by the reduction catalytic converter can no longer be expected, and hence exhaust gas having a large amount of NOx must be emitted into the atmosphere.

Therefore, the present invention takes the above-described existing problems into consideration, with an object of providing an exhaust gas purification apparatus in which clogging is suppressed by reducing the volume unrelated to injection-supply of a liquid reducing agent, or by applying a water repellency treatment to at least one of the injection nozzle and its associated piping.

### MEANS OF SOLVING THE PROBLEMS

An exhaust gas purification apparatus of an engine not according to the present invention comprises:
a reduction catalytic converter arranged in an engine exhaust system, for reducing and purifying nitrogen oxide by a liquid reducing agent; a reducing agent supply device that controls a flow rate of a liquid reducing agent supplied to the reduction catalytic converter, depending on engine operating conditions; an injection nozzle that is secured to the exhaust system via a flange, for injection-supplying the liquid reducing agent into exhaust gas at a position upstream of the reduction catalytic converter; and piping that provides a fluid communication between the reducing agent supply device and the injection nozzle, the exhaust gas purification apparatus being provided with such a configuration that the piping is constructed from a material made of ceramics.

In this case, cooling fins may be disposed in rows on the flange, or a coolant may be flowed through the flange. Moreover, an insulating material gasket may be interposed between the exhaust system and the flange.

In accordance with the present invention, an exhaust gas purification apparatus of an engine is provided, which comprises: a reduction catalytic converter arranged in an engine exhaust system, for reducing and purifying nitrogen oxide by a liquid reducing agent; a reducing agent supply device that controls a flow rate of a liquid reducing agent that is supplied to the reduction catalytic converter, depending on engine operating conditions; an injection nozzle that injection-supplies the liquid reducing agent into exhaust gas at a position upstream of the reduction catalytic converter; and piping that provides a fluid communication between the reducing agent supply device and the injection nozzle, the exhaust gas purification apparatus is provided with such a configuration that a water repellency treatment is applied to an inner wall of at least one of the injection nozzle and the piping.

In this case, a fluorocarbon resin treatment or an organic plating treatment can be applied as the water repellency treatment. Moreover, the piping may be arranged to have an axis thereof extending in a substantially vertical direction, and the injection nozzle can be connected to a lower end of the piping.

### EFFECTS OF THE INVENTION

According to the exhaust gas purification apparatus not according to the present invention, NOx contained in the engine exhaust gas is reduced and purified in the reduction catalytic converter, by using the liquid reducing agent supplied and controlled by the reducing agent supply device. In this case, because the piping that provides a fluid communication between the reducing agent supply device and the injection nozzle is constructed from a material made of ceramics, its coefficient of thermal conductivity, which is a thermal characteristic, is small. Therefore the transmission of heat of the exhaust system to the reducing agent supply device is suppressed. Thus, even if the reducing agent supply device is positioned close to the exhaust system, an increase in its temperature in use is prevented, and a predetermined environment of its usage can be fulfilled. Moreover, as a result of enabling the reducing agent supply device to be positioned close to the exhaust system, the length of the piping can be shorter, and the volume unrelated to the injection-supply of the liquid reducing agent can be decreased, so that the liquid reducing agent attached to the inner walls of the piping and the injection nozzle immediately after the stopping injection-supply of the liquid reducing agent is reduced. Therefore, even if the water content evaporates from the liquid reducing agent due to the exhaust heat, and the reducing agent constituents are deposited, the absolute amount thereof becomes too small to cause clogging of the piping and the injection nozzle.

On the other hand, after restarting injection-supply of the liquid reducing agent, the liquid reducing agent flows vigorously through the piping and the injection nozzle, and hence the reducing agent constituents that have solidified on the inner walls are dissolved and discharged into the exhaust system. Therefore, even if the injection-supply of the liquid reducing agent is performed intermittently, there is no longer a gradual deposition of the constituents of the liquid reducing agent on the inner walls of the piping and the injection nozzle, so that occurrence of clogging is fully suppressed. Therefore the necessary NOx purification efficiency can be maintained for a long time.

According to the exhaust gas purification apparatus of the present invention, NOx contained in the engine exhaust gas is reduced and purified in the reduction catalytic converter by using the liquid reducing agent supplied by the reducing agent supply device. In this case, because the water repellency treatment is applied to the inner wall of at least one of the injection nozzle and the piping, when the injection-supply of the liquid reducing agent stops, the remaining liquid reducing agent therein drops downward, and the amount of urea aqueous solution held on the inner wall thereof decreases. Therefore, even if the water content evaporates from the liquid reducing agent due to the exhaust heat, and the reducing agent constituents are deposited, the absolute amount thereof becomes too small to cause clogging of the piping and the injection nozzle.

On the other hand, after restarting injection-supply of the liquid reducing agent, the liquid reducing agent flows vigorously through the piping and the injection nozzle, and hence the reducing agent constituents that have solidified on the inner walls are dissolved and discharged into the exhaust system. Therefore, even if the injection-supply of the liquid reducing agent is performed intermittently, there is no longer a gradual deposition of the constituents of the liquid reducing agent on the inner walls of the piping and the injection nozzle, so that the clogging is fully suppressed. Therefore the necessary NOx purification efficiency can be maintained for a long time.

### BRIEF DESCRIPTION OF THE DRAWINGS

FIG. 1 is a basic block diagram of an exhaust gas purification apparatus to which the present invention is applied;
FIG. 2 is an enlarged view of a region around the injection nozzle in FIG. 1;
FIG. 3 is an explanatory diagram of an air cooling structure that can be adopted by the apparatus not according to the present invention;
FIG.4 is an explanatory diagram of a water cooling structure that can be adopted by the apparatus not according to the present invention; and
FIG. 5 is an explanatory diagram of a water repellent layer according to the present invention.

### EXPLANATION OF REFERENCE SYMBOLS

- 10: Engine
- 14: NOx reduction catalytic converter
- 16: Exhaust pipe
- 16A: Opening portion
- 18: Reducing agent supply device
- 20: Piping
- 22: Injection nozzle
- 24: Flange
- 30: Cooling fin
- 32: Water repellent layer

### BEST MODE FOR CARRYING OUT THE INVENTION

Hereunder is a detailed description of the present invention, with reference to the appended drawings.

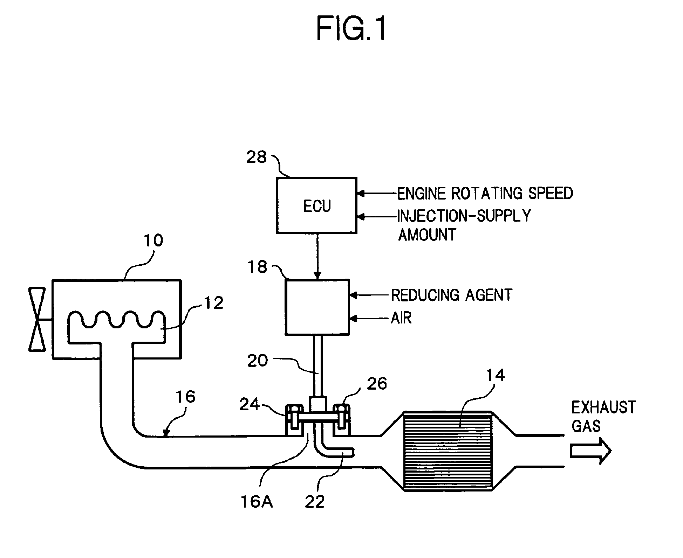

Figure 1 shows the basic construction of an exhaust gas purification apparatus to which the present invention is applied.

The exhaust gas of an engine 10 is discharged into the atmosphere from an exhaust gas manifold 12 via an exhaust pipe 16, in which a NOx reduction catalytic converter 14 is arranged. In particular, in the exhaust pipe 16, in order from the exhaust gas upstream side are respectively arranged; an oxidation catalytic converter for nitrogen monoxide (NO), a NOx reduction catalytic converter, and an ammonia oxidation catalytic converter, and before and after these are arranged a thermal sensor and an oxygen sensor and the like, to thereby construct the exhaust system, whose detail is not shown in the figures.

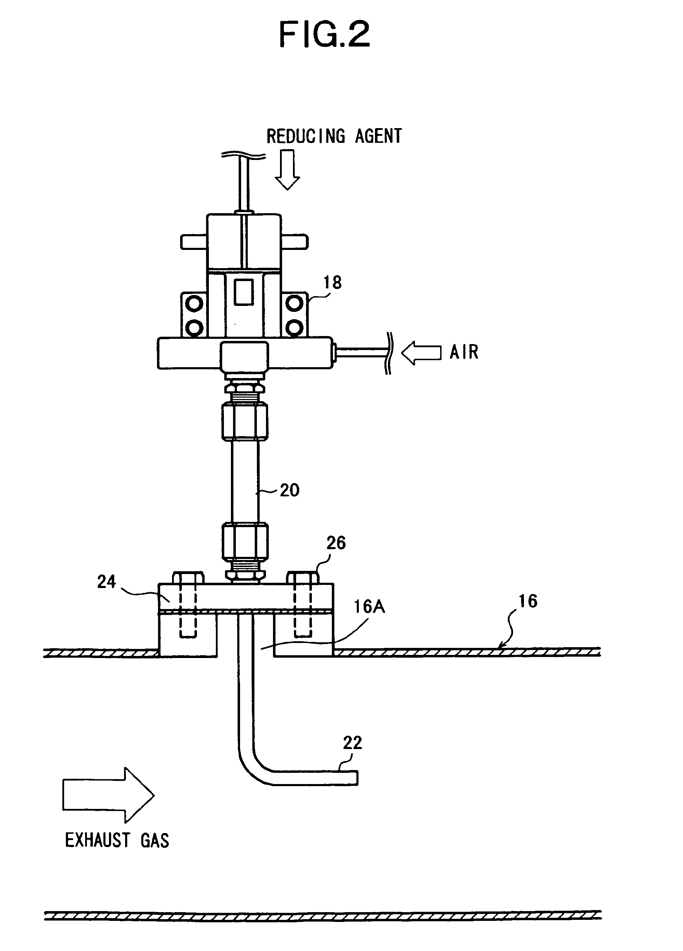

To the exhaust gas upstream of the NOx reduction catalytic converter 14, a liquid reducing agent together with air is injection-supplied from a reducing agent supply device 18 via piping 20 and an injection nozzle 22. That is, as shown in FIG. 2, a flange 24 to which the injection nozzle 22 is attached, is fastened by bolts 26 to the exhaust pipe 16, which is located on an upstream side of the exhaust gas flow from the NOx reduction catalytic converter 14, so as to cover an opening portion 16A opened in the peripheral wall of the exhaust pipe 16. In the description hereunder, a urea aqueous solution is used as the liquid reducing agent, however an ammonia aqueous solution, or diesel oil whose main constituent is hydrocarbons may alternatively be used. Here the urea aqueous solution is a solution in which solid or powder urea is dissolved, and it is supplied to the reducing agent supply device 18 from a storage tank (not shown).

The urea aqueous solution that is injection-supplied to the exhaust gas flow at an upstream position of the NOx reduction catalytic converter 14 is hydrolyzed due to the exhaust heat and the steam in the exhaust gas, and ammonia is easily produced. It is well known that the produced ammonia reacts with NOx in the exhaust gas, in the NOx reduction catalytic converter 14, and is purified into water and harmless gas.

Moreover, a control unit 28 incorporating therein a built-in computer is provided so as to control the amount of injection-supply of the urea aqueous solution, depending on engine operating conditions. The control unit 28 controls the reducing agent supply device 18 depending on the engine rotating speed and the fuel injection amount input via a CAN (Controller Area Network).

According to the exhaust gas purification apparatus of the apparatus not according to the present invention, the reducing agent supply device 18 and the injection nozzle 22 are in fluid communication with one another by means of the piping 20 made of ceramics.

According to such a construction, since the reducing agent supply device 18 and the injection nozzle 22 are connected to have a fluid communication therebetween via the piping 20 made of ceramics, its coefficient of thermal conductivity, which is a thermal characteristic, is small. Therefore, the transmission of heat of the exhaust pipe 16 to the reducing agent supply device 18 is appreciably suppressed and restricted. Therefore, even if the reducing agent supply device 18 is positioned close to the exhaust pipe 16, a temperature rise during the usage of the reducing agent supply device 18 is fully suppressed, and a predetermined environmental condition in use can be fulfilled. Moreover, as a result of enabling the reducing agent supply device 18 to be positioned close to the exhaust pipe 16, the length of the piping 20 can be shorter, and the pipe volume unrelated to the injection-supply of the urea aqueous solution can be reduced with certainty. Therefore, the urea aqueous solution attached to the inner walls of the piping 20 and the injection nozzle 22 immediately after stopping injection-supply of the urea aqueous solution is reduced. Therefore, even if the water content evaporates from the urea aqueous solution due to the exhaust heat, and the urea is deposited on the inner walls, the absolute amount thereof becomes too small to cause clogging of the piping 20 and the injection nozzle 22.

On the other hand, when the engine operating conditions change and the injection-supply of the urea aqueous solution is restarted, the urea aqueous solution and air flows vigorously through the piping 20 and the injection nozzle 22, and hence the urea that has solidified on the inner walls is dissolved and discharged into the exhaust pipe 16. Therefore, even if the injection-supply of the urea aqueous solution is intermittently performed, there is no longer a gradual deposition of the urea on the inner walls of the piping 20 and the injection nozzle 22, and the injection-supply of the urea aqueous solution depending on the engine operating conditions is realized. Therefore, the necessary NOx purification efficiency can be maintained for a long time.

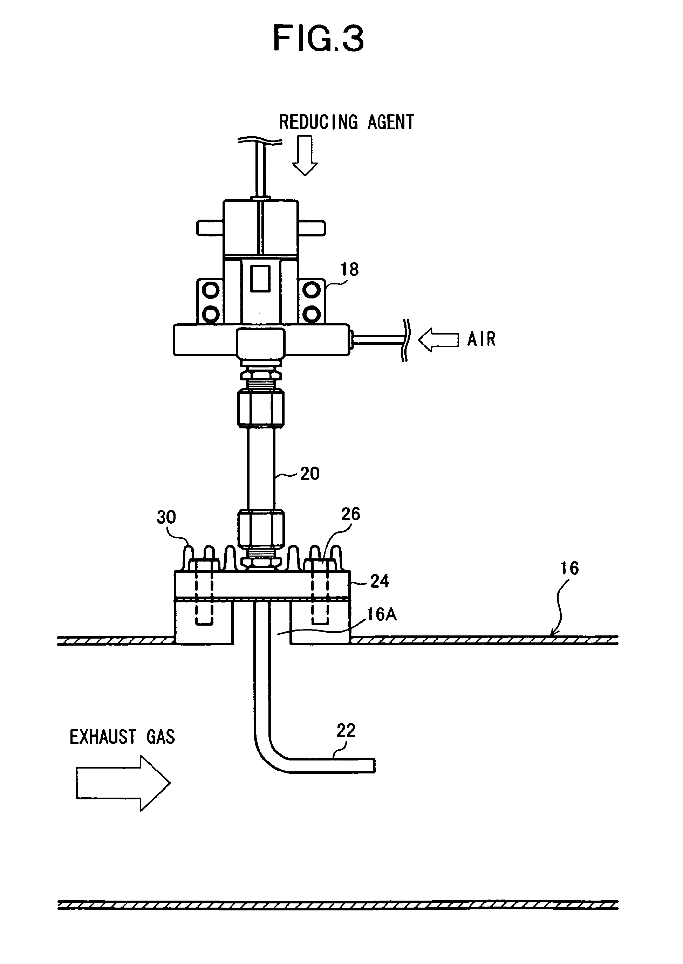

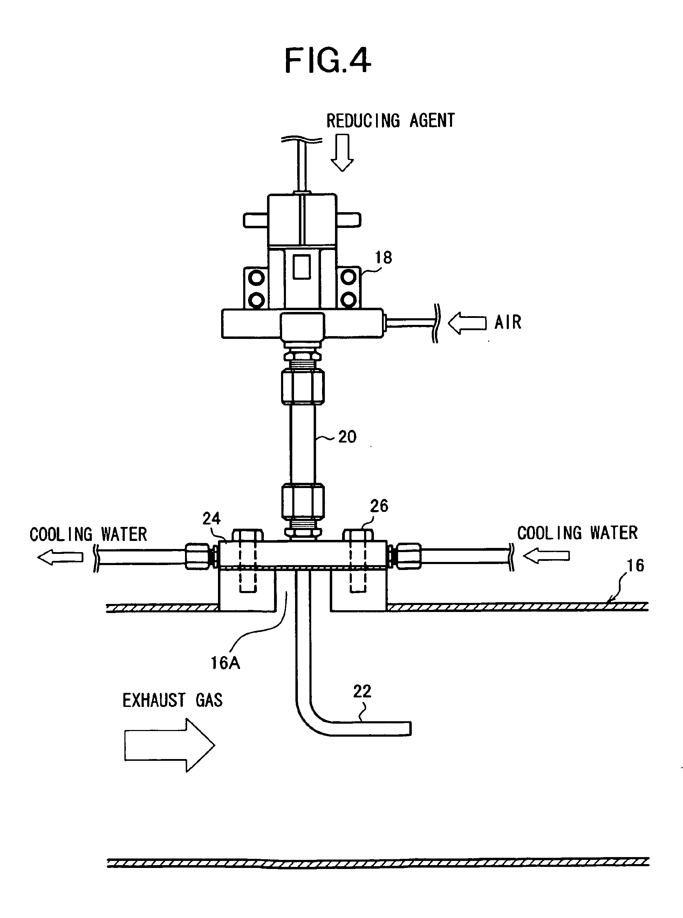

Moreover, in order to further reduce the heat quantity transmitted from the exhaust pipe 16 to the reducing agent supply device 18, as shown FIG. 3, an air cooling structure in which cooling fins 30 that are made of a material having good thermal conductivity such as copper are disposed in rows on the flange 24 that covers the opening portion 16A opened in the peripheral wall of the exhaust pipe 16, may be adopted. Moreover, as shown in FIG. 4, a water cooling structure in which a cooling water passage is formed inside the flange 24, and engine cooling water or the like is passed therethrough as a coolant, may be adopted. Both of the air cooling structure and the water cooling structure in the flange 24 may be adopted.

By adopting such a cooling structure, the exhaust heat transmitted from the exhaust pipe 16 to the flange 24 is dissipated by radiation by means of the cooling fins 30, or is heat exchanged with the cooling water, thus reducing the heat quantity that is transmitted to the piping 20. Therefore, the temperature in use of the reducing agent supply device 18 is reduced, and hence it becomes possible to position the reducing agent supply device 18 closer to the exhaust pipe 16, and the piping volume that is unrelated to the injection-supply of the urea aqueous solution is further reduced. Moreover, since the absolute amount of the urea aqueous solution that is attached to the inner walls of the piping 20 and the injection nozzle 22 is further reduced, the clogging thereof can be effectively prevented.

Furthermore, instead of the air cooling structure or the water cooling structure, an insulating material gasket can be interposed between the opening portion 16A of the exhaust pipe 16 and the flange 24. By such a structure, transmission of the heat of the exhaust pipe 16 to the flange 24 is suppressed, and a similar effect to the above effects can be achieved. Moreover, in particular, in addition to the air cooling structure and/or the water cooling structure, by interposing the insulating material gasket between the opening portion 16A and the flange 24, the heat quantity transmitted from the exhaust pipe 16 to the reducing agent supply device 18 is effectively reduced, and the reducing agent supply device 18 can be positioned even closer to the exhaust pipe 16.

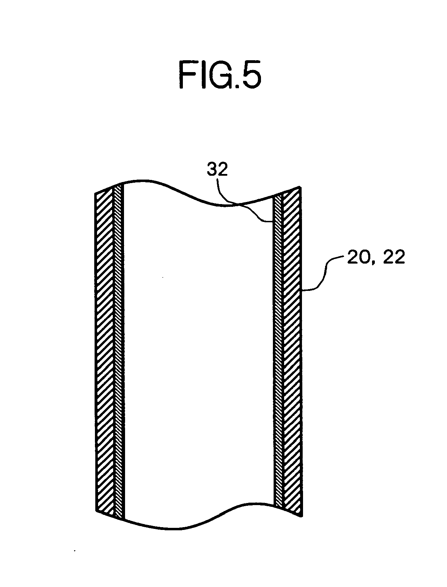

Figure 5 shows the structure of an exhaust gas purification apparatus according to the present invention.

According to the present invention, as a prerequisite for the basic structure of the exhaust gas purification apparatus shown in FIG. 1 and 2, as shown FIG. 5, a water repellent layer 32 is formed by a fluorocarbon resin treatment or an organic plating treatment, as a water repellent treatment on the inner walls of the piping 20 and the injection nozzle 22.

According to such a structure, since the water repellent treatment is applied to the inner walls of the piping 20 and the injection nozzle 22, when the injection-supply of the urea aqueous solution stops, the urea aqueous solution remaining inside thereof drops downward, reducing the urea aqueous solution attached to the inner walls of the piping 20 and the injection nozzle 22. Therefore, even if the water content evaporates from the urea aqueous solution due to the exhaust heat, and the urea is deposited on the inner walls, its absolute amount becomes too small to cause clogging of the piping 20 and the injection nozzle 22.

On the other hand, when the engine operating conditions change and the injection-supply of the urea aqueous solution is restarted, the urea aqueous solution and air flows vigorously through the piping 20 and the injection nozzle 22, and hence the urea that has solidified on the inner walls is dissolved and discharged into the exhaust pipe 16. Therefore, even if the injection-supply of the urea aqueous solution is intermittently performed, there is no longer a gradual build up of the urea on the inner walls of the piping 20 and the injection nozzle 22, and the injection-supply of the urea aqueous solution depending on the engine operating conditions is possible. Therefore the necessary NOx purification efficiency can be maintained over a long term.

Moreover, if the fluorocarbon resin treatment is applied as the water repellent treatment, a decrease in the water repellent efficiency can be suppressed, even when the piping 20 and the injection nozzle 22 are heated by the exhaust heat. On the other hand, by applying the organic plating treatment as the water repellent treatment, the water repellent efficiency of the piping 20 and the injection nozzle 22 is improved, and also the water repellent layer 32 is kept from coming off from the inner walls.

Moreover, it is preferable that the axis of the piping 20 is extended in a substantially vertical direction, and the injection nozzle 22 is connected to the lower end thereof. By such a structure, when the injection-supply of the urea aqueous solution stops, the urea aqueous solution inside the piping 20 drops vertically downward under gravity, and is discharged to the exhaust pipe 16 from the injection hole of the injection nozzle 22. Therefore, the amount of the urea aqueous solution attached to the inner wall of the piping 20 is further reduced, and even if the water content evaporates from the urea aqueous solution due to the exhaust heat, and the urea is deposited by precipitation, since its absolute amount is small, clogging of the piping 20 is further suppressed.

In the present invention, the water repellent treatment is applied to both the piping 20 and the injection nozzle 22. However the water repellent treatment may be applied to only the one of them that is vulnerable to clogging. Also, if the water repellent treatment is applied to the inner wall of the piping 20, on only a particular area that can be heated to a temperature at which the urea aqueous solution can solidify, the clogging thereof can be suppressed.

### INDUSTRIAL APPLICABILITY

As described above, in the exhaust gas purification apparatus according to the present invention, even if when the injection-supply of the liquid reducing agent stops, the water content evaporates from the liquid reducing agent remaining in the injection nozzle and its piping, and the reducing agent constituents are deposited, its absolute amount is too small to cause clogging of the piping and the injection nozzle, and hence this is extremely advantageous.

## Claims

1. An exhaust gas purification apparatus of an engine (10) comprising:
a reduction catalytic converter (14) arranged in an engine exhaust system, for reducing and purifying nitrogen oxide by a liquid reducing agent;
a reducing agent supply device (18) that controls a flow rate of a liquid reducing agent that is supplied to said reduction catalytic converter (14), depending on engine operating conditions;
an injection nozzle (22) that injection-supplies the liquid reducing agent into exhaust gas at a position upstream of said reduction catalytic converter (14); and
piping (20) that provides a fluid communication between said reducing agent supply device (18) and said injection nozzle (22),
wherein a water repellency treatment is applied to an inner wall of at least one of said injection nozzle (22) and said piping (20).

2. The exhaust gas purification apparatus of an engine (10) according to claim 1, wherein said water repellency treatment is a fluorocarbon resin treatment.

3. The exhaust gas purification apparatus of an engine (10) according to claim 1, wherein said water repellency treatment is an organic plating treatment.

4. The exhaust gas purification apparatus of an engine (10) according to claim 1, wherein said piping (20) is arranged to have an axis thereof extending in a substantially vertical direction, and said injection nozzle (22) is connected to a lower end of said piping (20).

## Patentansprüche

1. Abgasreinigungsvorrichtung eines Motors (10), die umfasst:
einen Reduktionskatalysator (14), der in einem Motor-Abgassystem angeordnet ist, um Stickoxid mit einem flüssigen Reduktionsmittel zu reduzieren und zu reinigen;
eine Reduktionsmittel-Zuführeinrichtung (18), die eine Strömungsgeschwindigkeit eines flüssigen Reduktionsmittels, das dem Reduktions-Katalysator (14) zugeführt wird, in Abhängigkeit von Motor-Betriebsbedingungen steuert;
eine Einspritzdüse (22), die das flüssige Reduktionsmittel in Abgas an einer Position
vor dem Reduktions-Katalysator (14) einspritzt; und
eine Rohrleitung (20), die Fluidverbindung zwischen der Reduktionsmittel-Zuführeinrichtung (18) und der Einspritzdüse (22) herstellt,
wobei eine Wasserabweisungsbehandlung an einer Innenwand wenigstens der Einspritzdüse (22) oder der Rohrleitung (20) durchgeführt wird.

2. Abgasreinigungsvorrichtung eines Motors (10) nach Anspruch 1, wobei die Wasserabweisungsbehandlung eine Behandlung mit Fluorkarbonharz ist.

3. Abgasreinigungsvorrichtung eines Motors (10) nach Anspruch 1, wobei die Wasserabweisungsbehandlung eine organische Plattierungsbehandlung ist.

4. Abgasreinigungsvorrichtung eines Motors (10) nach Anspruch 1, wobei die Rohrleitung (20) so eingerichtet ist, dass sich eine Achse derselben in einer im Wesentlichen vertikalen Richtung erstreckt, und die Einspritzdüse (22) mit einem unteren Ende der Rohrleitung (20) verbunden ist.

## Revendications

1. Appareil pour la purification de gaz d'échappement d'un moteur (10) comprenant :
un convertisseur catalytique à réduction (14) disposé dans un système d'échappement d'un moteur pour réduire et purifier l'oxyde d'azote à l'aide d'un agent réducteur liquide ;
un dispositif d'alimentation en agent réducteur (18) qui régule un débit d'un agent réducteur liquide amené audit convertisseur catalytique à réduction (14) en fonction des conditions de fonctionnement du moteur ;
une buse d'injection (22) qui amène par injection l'agent réducteur liquide dans le gaz d'échappement en amont dudit convertisseur catalytique à réduction (14) ; et
une conduite (20) assurant une communication de fluide entre ledit dispositif d'alimentation en agent réducteur (18) et ladite buse d'injection (22),
dans lequel un traitement hydrophobisant est appliqué à une paroi intérieure d'au moins une desdites buse d'injection (22) et conduite (20).

2. Appareil pour la purification du gaz d'échappement d'un moteur (10) selon la revendication 1, dans lequel ledit traitement hydrophobisant est un traitement avec une résine fluorocarbonée.

3. Appareil pour la purification du gaz d'échappement d'un moteur (10) selon la revendication 2, dans lequel ledit traitement hydrophobisant est un traitement par un plaquage organique.

4. Appareil pour la purification du gaz d'échappement d'un moteur (10) selon la revendication 1, dans lequel ladite conduite (20) est disposée de manière à avoir un axe sensiblement vertical, et ladite buse d'injection (22) est raccordée à une extrémité inférieure de ladite conduite (20).
